# EUROPEAN PATENT APPLICATION

(11) **EP 3 908 038 A1**
(43) Date of publication of application: **10.11.2021**
(21) Application number: 20736040.5
(22) Date of filing: 03.01.2020
(51) Int. Cl.: H04W 28/10

(54) **DATA DISTRIBUTION TRANSMISSION METHOD, NETWORK MASTER NODE MN AND NETWORK SECONDARY NODE SN**

(30) Priority: 04.01.2019 CN 201910009585
(71) Applicant: VIVO MOBILE COMMUNICATION CO., LTD., Dongguan, Guangdong 523860 (CN)
(72) Inventor: KIMBA DIT ADAMOU, Boubacar, Dongguan, Guangdong 523860 (CN); YANG, Xiaodong, Dongguan, Guangdong 523860 (CN); BAO, Wei, Dongguan, Guangdong 523860 (CN)
(74) Representative: Lavoix
(86) International application number: PCT/CN2020/070266
(87) International publication number: WO 2020/140969

(57) **Abstract**

This disclosure provides a transmission method with data offloading, a network master node MN, and a network secondary node SN. The method on the MN side includes: transmitting offloading request information to a network secondary node SN, where the offloading request information includes information about a target QoS flow and resource indication information, and the resource indication information is used to indicate that the SN transmits the target QoS flow by using a target data radio bearer DRB.

## Description

### CROSS-REFERENCE TO RELATED APPLICATIONS

This application claims priority to Chinese Patent Application No. 201910009585.6, filed in China on January 04, 2019, which is incorporated herein by reference in its entirety.

### TECHNICAL FIELD

This disclosure relates to the field of communications technologies, and in particular, to a transmission method with data offloading, a network master node MN, and a network secondary node SN.

### BACKGROUND

In a multi-connectivity scenario, user equipment (User Equipment, UE) may be connected to a plurality of network nodes simultaneously. When a network node is short of radio resources, the network node may offload a flow of data of the UE to another network node. For example, a master node (Master Node, MN) may offload a flow of data of the UE to a secondary node (Secondary Node, SN).

The SN may establish a data radio bearer (Data Radio Bearer, DRB) or use an existing DRB to transmit the offloaded data. If the DRB transmitting the data is an SN-terminated master cell group (Master Cell Group, MCG) bearer, the DRB transmitting the data may still uses resources of the MN

It can be learned that the transmission method with data offloading in the related art has a problem that excessive resources of the MN are used, resulting in poor effect of transmission with data offloading.

### SUMMARY

Embodiments of this disclosure provide a transmission method with data offloading, a network master node MN, and a network secondary node SN, to resolve a problem of the transmission method with data offloading in the related art that excessive resources of the MN are used, resulting in poor effect of transmission with data offloading.

To resolve the foregoing technical problem, this disclosure is implemented as follows:

According to a first aspect, an embodiment of this disclosure provides a transmission method with data offloading, applied to an MN, where the method includes:
transmitting offloading request information to a network secondary node SN, where
the offloading request information includes information about a target data flow (QoS flow) and resource indication information, and the resource indication information is used to indicate that the SN transmits the target QoS flow by using a target DRB.

According to a second aspect, an embodiment of this disclosure provides a transmission method with data offloading, applied to a network secondary node SN, where the method includes:
receiving offloading request information transmitted by an MN, where the offloading request information includes information about a target data flow QoS flow and resource indication information; and
transmitting, according to the resource indication information, the target QoS flow by using a target DRB; or, in a case that the target QoS flow is unable to be transmitted according to the resource indication information, transmitting resource information to the MN, where the resource information is resource information available to the SN for establishing the target DRB.

According to a third aspect, an embodiment of this disclosure provides an MN, including:
a first transmitting module, configured to transmit offloading request information to a network secondary node SN, where
the offloading request information includes information about a target data flow QoS flow and resource indication information, and the resource indication information is used to indicate that the SN transmits the target QoS flow by using a target data radio bearer DRB.

According to a fourth aspect, an embodiment of this disclosure provides an SN, including:
a first receiving module, configured to receive offloading request information transmitted by a network master node MN, where the offloading request information includes information about a target data flow QoS flow and resource indication information; and
a transmission module, configured to: transmit, according to the resource indication information, the target QoS flow by using a target data radio bearer DRB; or, in a case that the target QoS flow is unable to be transmitted according to the resource indication information, transmit resource information to the MN, where the resource information is resource information available to the SN for establishing the target DRB.

According to a fifth aspect, an embodiment of this disclosure provides an MN, including a memory, a processor, and a computer program stored in the memory and capable of running on the processor, where when the computer program is executed by the processor, the steps of the transmission method with data offloading provided in the first aspect of the embodiments of this disclosure are implemented.

According to a sixth aspect, an embodiment of this disclosure provides an SN, including a memory, a processor, and a computer program stored in the memory and capable of running on the processor, where when the computer program is executed by the processor, the steps of the transmission method with data offloading provided in the second aspect of the embodiments of this disclosure are implemented.

According to a seventh aspect, an embodiment of this disclosure provides a computer-readable storage medium, where the computer-readable storage medium stores a computer program, and when the computer program is executed by a processor, the steps of the transmission method with data offloading provided in the first aspect of the embodiments of this disclosure are implemented, or when the computer program is executed by a processor, the steps of the transmission method with data offloading provided in the second aspect of the embodiments of this disclosure are implemented.

In the embodiments of this disclosure, when the MN offloads a flow of data of UE to the SN, the MN transmits resource indication information to the SN, so that the SN can determine or establish a target DRB according to the resource indication information, and perform effective transmission of the offloaded data on the target DRB. Because the SN determines or establishes the target DRB according to the resource indication information from the MN, this can effectively prevent the SN from using excessive radio resources of the MN during transmission of the target QoS flow, making data offloading of the MN more effective.

### BRIEF DESCRIPTION OF DRAWINGS

To describe the technical solutions in the embodiments of this disclosure more clearly, the following briefly describes the accompanying drawings required for describing the embodiments of this disclosure. Apparently, the accompanying drawings in the following description show merely some embodiments of this disclosure, and persons of ordinary skill in the art may derive other drawings from these accompanying drawings without creative efforts.
FIG. 1 is a schematic diagram of a transmission system with data offloading according to an embodiment of this disclosure;
FIG. 2 is a schematic diagram of QoS flow mapping according to an embodiment of this disclosure;
FIG. 3 is a flowchart of a transmission method with data offloading according to an embodiment of this disclosure;
FIG. 4 is a flowchart of another transmission method with data offloading according to an embodiment of this disclosure;
FIG. 5 is a structural diagram of a network master node MN according to an embodiment of this disclosure;
FIG. 6 is a structural diagram of another network master node MN according to an embodiment of this disclosure.
FIG. 7 is a structural diagram of a network secondary node SN according to an embodiment of this disclosure;
FIG. 8 is a structural diagram of another network secondary node SN according to an embodiment of this disclosure;
FIG. 9 is a schematic structural diagram of hardware of a network master node MN according to an embodiment of this disclosure; and
FIG. 10 is a schematic structural diagram of hardware of a network secondary node SN according to an embodiment of this disclosure.

### DESCRIPTION OF EMBODIMENTS

The following clearly and completely describes the technical solutions in the embodiments of this disclosure with reference to the accompanying drawings in the embodiments of this disclosure. Apparently, the described embodiments are some rather than all of the embodiments of this disclosure. All other embodiments obtained by persons of ordinary skill in the art based on the embodiments of this disclosure without creative efforts shall fall within the protection scope of this disclosure.

Terms "include", "comprise" and any other variants thereof in the specification and claims of the application are intended to cover the non-exclusive inclusion. For example, a process, method, system, product, or device that includes a series of steps or units is not necessarily limited to those expressly listed steps or units, but may include other steps or units not expressly listed or inherent to such process, method, system, product, or device. Moreover, use of "and/or" in the specification and claims represents at least one of the connected objects. For example, A and/or B means three cases: A alone, B alone, or A and B together.

In the embodiments of this disclosure, terms such as "an example" or "for example" are used to represent giving an example, an instance, or an illustration. Any embodiment or design solution described as "exemplary" or "for example" in the embodiments of this disclosure should not be construed as being more preferred or advantageous than other embodiments or design solutions. Specifically, the terms such as "an example" or "for example" are used to present related concepts in a specific manner.

The following describes the embodiments of this disclosure with reference to the accompanying drawings. A transmission method with data offloading provided in the embodiments of this disclosure may be applied to a wireless communications system. The wireless communications system may be a 5G system, or an evolved long term evolution (Evolved Long Term Evolution, eLTE) system, or a later evolved communications system. The communications device may be user equipment or a network-side device.

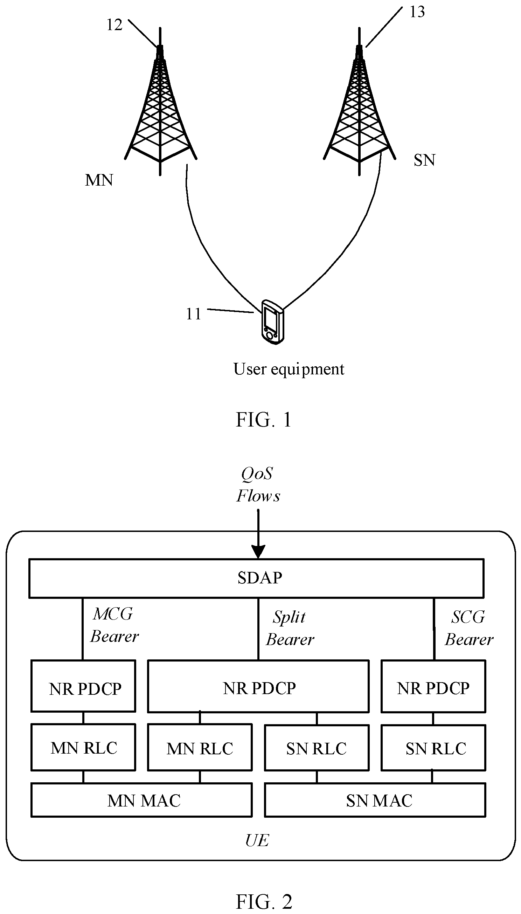

FIG. 1 is a structural diagram of a transmission system with data offloading according to an embodiment of this disclosure. In the transmission system with data offloading, user equipment may communicate with a plurality of network nodes, for example, with an MN and an SN. As shown in FIG. 1, the transmission system with data offloading includes user equipment 11, an MN 12, and an SN 13. The user equipment 11 may be a mobile communications device, such as a mobile phone, a tablet computer (Tablet Personal Computer), a laptop computer (Laptop Computer), a personal digital assistant (personal digital assistant, PDA), a mobile internet device (Mobile Internet Device, MID), or a wearable device (Wearable Device). It should be noted that the user equipment 11 is not limited to any specific type in the embodiments of this disclosure. The MN 12 and SN 13 may be network nodes in a 5G communications system, network nodes in a 4G communications system, network nodes in a 3G communications system, network nodes in a later evolved communications system, or the like. It should be noted that the network node is not limited to any specific type in this embodiment of this disclosure.

Before describing the embodiments of this disclosure in detail, the following briefly describes a dual-connectivity scenario and data offloading in a dual-connectivity scenario.

In a multi-connectivity scenario, UE may be connected to a plurality of network nodes simultaneously. For example, in a dual-connectivity (Dual Connectivity, DC) scenario, UE is connected to an MN and an SN simultaneously. The UE can have its traffic carried an SN-supported split bearer or an SN-terminated master cell group (Master Cell Group, MCG) bearer, as shown in FIG. 2.

The traffic of the UE can be carried on different data flows (QoS flow). In a multi-connectivity scenario, when a network node is short of radio resources, the network node may offload a flow of data of the UE to another network node.

For example, in a 5G access network, one or more data flows may be mapped to a same DRB. In a dual-connectivity scenario, a 5G communications system allows one or more data flows to be offloaded from an MN to an SN, or from an SN to an MN

When the MN is short of radio resources, the MN may offload a QoS flow (for example, QoS_flow_1) of the UE to the SN. For transmission of QoS_flow_1, the SN may need to create a new DRB (for example, DRB 1) for QoS_flow_1, or may map QoS_flow_1 to an existing DRB (for example, DRB 2). If the SN establishes the DRB 1 as an SN-terminated MCG bearer, the DRB 1 uses resources of the MN; and if the DRB 2 is an SN-terminated MCG bearer, the DRB 2 also uses resources of the MN

Because the MN is short of radio resources, if the offloaded QoS_flow_1 still needs to use resources of the MN for transmission, excessive resources of the MN are used, resulting in poor effect of transmission with data offloading.

To resolve the above-mentioned problem, the embodiments of this disclosure provide a transmission system with data offloading shown in FIG. 1, and a transmission method with data offloading applied to the transmission system with data offloading. The method is as follows:

An MN transmits offloading request information to an SN, where the offloading request information includes information about a target QoS flow and resource indication information.

### The SN receives the offloading request information transmitted by the MN

The SN transmits, according to the resource indication information, the target QoS flow by using a target DRB; or, in a case that the SN is unable to transmit the target QoS flow according to the resource indication information, the SN transmits resource information to the MN, where the resource information is resource information available to the SN for establishing the target DRB, and the target DRB is used to transmit the target QoS flow.

In the embodiments of this disclosure, when the MN offloads a flow of data of UE to the SN, the MN transmits resource indication information to the SN, so that the SN can determine or establish a target DRB according to the resource indication information, and perform effective transmission of the offloaded data on the target DRB. Because the SN determines or establishes the target DRB according to the resource indication information from the MN, this can effectively prevent the SN from using excessive radio resources of the MN during transmission of the target QoS flow, making data offloading of the MN more effective.

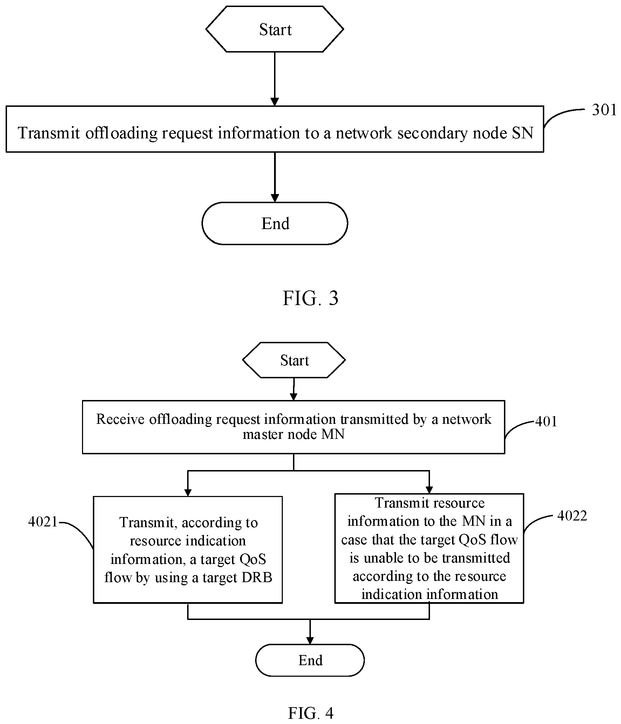

FIG. 3 is a flowchart of a transmission method with data offloading according to an embodiment of this disclosure. As shown in FIG. 3, the transmission method with data offloading is applied to a network master node MN, and the method includes the following steps.

Step 301: Transmit offloading request information to a network secondary node SN.

The offloading request information includes information about a target QoS flow and resource indication information, and the resource indication information is used to indicate that the SN transmits the target QoS flow by using a target DRB.

The target DRB may be an existing DRB, or may be a DRB established by the SN according to the resource indication information.

The target QoS flow is originally transmitted on the MN. For some reasons, for example, shortage of radio resources of the MN, the MN needs to offload the target QoS flow to the SN in order to resolve the shortage of radio resources through data offloading.

In view of this, the MN transmits the offloading request information to the SN.

The offloading request information includes information about a Qos flow to be offloaded by the MN (that is, the information about a target QoS flow), so that the SN learns the information about the Qos flow to be offloaded by the MN

The offloading request information further includes the resource indication information, so that the SN knows on which resources the target QoS flow can be transmitted, or on which resources the target QoS flow cannot be transmitted. The MN can properly indicate resource information to the SN based on usage of radio resources of the MN. This can effectively prevent the SN from using excessive radio resources of the MN during transmission of the target QoS flow, making data offloading of the MN more effective.

It can be learned that, in this embodiment of this disclosure, when the MN offloads a flow of data of UE to the SN, the MN transmits resource indication information to the SN, so that the SN can determine or establish a target DRB according to the resource indication information, and perform effective transmission of the offloaded data on the target DRB. Because the SN determines or establishes the target DRB according to the resource indication information from the MN, this can effectively prevent the SN from using excessive radio resources of the MN during transmission of the target QoS flow, making data offloading of the MN more effective.

Optionally, the target QoS flow includes at least one of the following:
at least one QoS flow on one DRB; and
at least two QoS flows on at least two DRBs.

In a 5G access network, one or more QoS flows may be mapped to a same DRB for transmission. Therefore, the MN may need to offload one Qos flow or a plurality of (including two) Qos flows to the SN. In addition, the MN may offload one or more QoS flows on one DRB to the SN, or may offload QoS flows on different DRBs to the SN.

In this way, the MN can flexibly select, based on usage of radio resources of the MN, a Qos flow that needs to be offloaded to the SN, so as to better resolve the shortage of radio resources of the MN. It can be learned that this implementation can improve efficiency and flexibility of transmission with data offloading.

Optionally, the resource indication information includes at least one of the following:
a usable resource set; and
an unusable resource set.

As mentioned above, the offloading request information is used to make the SN know on which resources the target QoS flow can be transmitted, or on which resources the target QoS flow cannot be transmitted. Therefore, the resource indication information may include a usable resource set and/or an unusable resource set.

In this way, the MN can indicate at least one set of resources to the SN based on usage of radio resources of the MN. This can effectively prevent the SN from using excessive radio resources of the MN during transmission of the target QoS flow, making data offloading of the MN more effective.

In this embodiment of this disclosure, when the SN receives the offloading request information transmitted by the MN, the SN may have the following two behaviors.

Manner 1: The SN determines or establishes, according to the resource indication information (a usable resource set and/or an unusable resource set) indicated by the MN, a target DRB to transmit the offloaded target QoS flow. This manner can effectively prevent the SN from using excessive radio resources of the MN during transmission of the target QoS flow, making data offloading of the MN more effective.

Manner 2: The SN is unable to transmit the target QoS flow according to the resource indication information indicated by the MN. In this case, the SN can transmit resource information to the MN to advise the MN of other usable resources to transmit the QoS flow, that is, the SN expects the SN to transmit the QoS flow according to the resource information transmitted by the SN.

In this manner, the MN receives the resource information transmitted by the SN; and the MN transmits feedback information to the SN.

When the MN receives the resource information transmitted by the SN, the MN may transmit the feedback information to the SN based on usage of radio resources of the MN. The feedback information is used to indicate whether the SN can establish a target DRB according to the resource information, or in other words, is used to indicate whether the resource information is usable by the SN to establish a target DRB.

In this manner, if the SN is unable to establish the target DRB according to the resource indication information indicated by the MN to complete transmission of the target QoS flow, the SN may feed an advised usable resource set back to the MN Based on the advised usable resource set fed back by the SN, the MN can decide whether to use the usable resource set advised by the SN and feed the decision back to the SN. In this way, through the aforementioned coordination mechanism between the MN and the SN, flexibility of using the radio resources of the MN can be improved.

Optionally, the resource indication information includes at least one of the following:
a bearer type, where the bearer type includes at least one of split (Split) bearer, master cell group MCG bearer, and secondary cell group (Secondary Cell Group, SCG) bearer; and
a mapping relationship between QoS flows and DRBs.

Optionally, the target DRB is an SN-terminated DRB.

FIG. 4 is a flowchart of another transmission method with data offloading according to an embodiment of this disclosure. As shown in FIG. 4, a transmission method with data offloading is applied to a network secondary node SN, and the method includes the following steps.

### Step 401: Receive offloading request information transmitted by a network master node MN

The offloading request information includes information about a target QoS flow and resource indication information.

After step 401 is performed, step 4021 or step 4022 may be performed.

Step 4021: Transmit, according to the resource indication information, the target QoS flow by using a target DRB.

The target DRB is used to transmit the target QoS flow.

Step 4022: Transmit resource information to the MN in a case that the target QoS flow is unable to be transmitted according to the resource indication information.

The resource information is resource information available to the SN for establishing the target DRB.

Optionally, the target DRB is an existing DRB; or
the target DRB is a DRB established by the SN according to the resource indication information.

Optionally, if the SN transmits the resource information to the MN, the method further includes:
receiving feedback information transmitted by the MN, where the feedback information is used to indicate whether the resource information is usable by the SN to establish the target DRB, or used to indicate whether the SN can establish the target DRB according to the resource information.

Optionally, the target QoS flow includes at least one of the following:
at least one QoS flow on one DRB; and
at least two QoS flows on at least two DRBs.

Optionally, the resource indication information includes at least one of the following:
a usable resource set; and
an unusable resource set.

Optionally, the resource indication information includes at least one of the following:
a bearer type, where the bearer type includes at least one of split bearer, master cell group MCG bearer, and secondary cell group SCG bearer; and
a mapping relationship between QoS flows and DRBs.

Optionally, the target DRB is an SN-terminated DRB.

It should be noted that this embodiment of this disclosure is an embodiment of the network secondary node SN corresponding to the embodiment shown in FIG. 3, and therefore, reference may be made to the relevant descriptions about the embodiment shown in FIG. 3 for specific implementations of this embodiment, which can achieve the same beneficial effect. To avoid repetition, details are not described herein again.

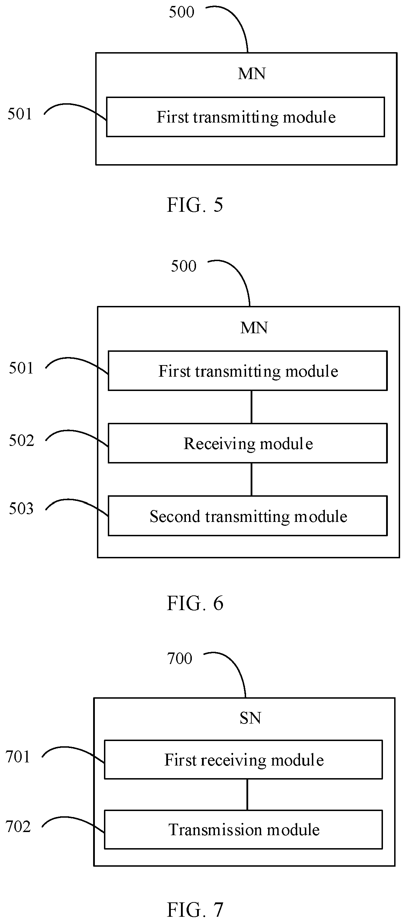

FIG. 5 is a structural diagram of a network master node MN according to an embodiment of this disclosure. As shown in FIG. 5, the MN 500 includes:
a first transmitting module 501, configured to transmit offloading request information to a network secondary node SN, where
the offloading request information includes information about a target QoS flow and resource indication information, and the resource indication information is used to indicate that the SN transmits the target QoS flow by using a target data radio bearer DRB.

Optionally, the target DRB is an existing DRB; or
the target DRB is a DRB established by the SN according to the resource indication information.

Optionally, as shown in FIG. 6, the MN 500 further includes:
a receiving module 502, configured to receive resource information transmitted by the SN; and
a second transmitting module 503, configured to transmit feedback information to the SN; where
the resource information is resource information available to the SN for establishing the target DRB, and the feedback information is used to indicate whether the resource information is usable by the SN to establish the target DRB.

Optionally, the target QoS flow includes at least one of the following:
at least one QoS flow on one DRB; and
at least two QoS flows on at least two DRBs.

Optionally, the resource indication information includes at least one of the following:
a usable resource set; and
an unusable resource set.

Optionally, the resource indication information includes at least one of the following:
a bearer type, where the bearer type includes at least one of split bearer, master cell group MCG bearer, and secondary cell group SCG bearer; and
a mapping relationship between QoS flows and DRBs.

Optionally, the target DRB is an SN-terminated DRB.

It should be noted that the MN 500 in this embodiment of this disclosure may be the MN in any implementation of the method embodiments. Any implementation of the MN in the method embodiments can be implemented by the MN in this embodiment of this disclosure, with the same beneficial effect achieved. To avoid repetition, details are not described herein again.

FIG. 7 is a structural diagram of a network secondary node SN according to an embodiment of this disclosure. As shown in FIG. 7, the SN 700 includes:
a first receiving module 701, configured to receive offloading request information transmitted by a network master node MN, where the offloading request information includes information about a target QoS flow and resource indication information; and
a transmission module 702, configured to: transmit, according to the resource indication information, the target QoS flow by using a target data radio bearer DRB; or, in a case that the target QoS flow is unable to be transmitted according to the resource indication information, transmit resource information to the MN, where the resource information is resource information available to the SN for establishing the target DRB.

Optionally, the target DRB is an existing DRB; or
the target DRB is a DRB established by the SN according to the resource indication information.

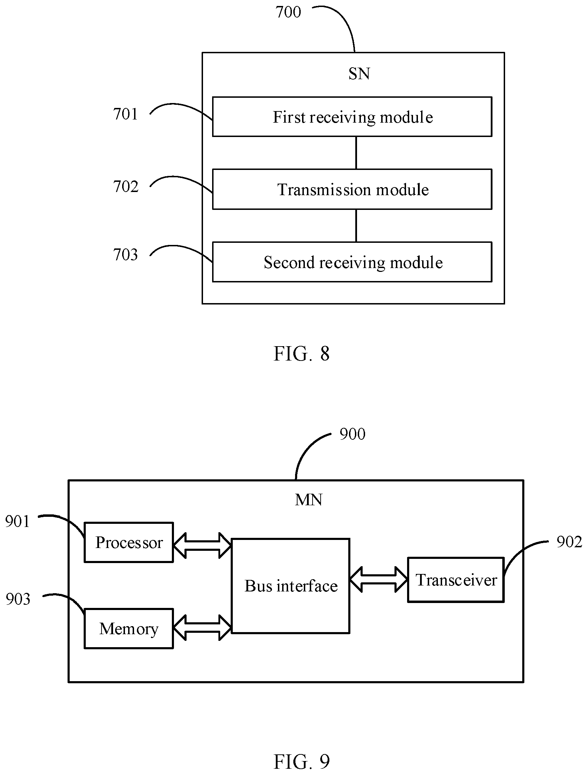

Optionally, if the SN transmits the resource information to the MN, as shown in FIG. 8, the SN 700 further includes:
a second receiving module 703, configured to receive feedback information transmitted by the MN, where the feedback information is used to indicate whether the resource information is usable by the SN to establish the target DRB.

Optionally, the target QoS flow includes at least one of the following:
at least one QoS flow on one DRB; and
at least two QoS flows on at least two DRBs.

Optionally, the resource indication information includes at least one of the following:
a usable resource set; and
an unusable resource set.

Optionally, the resource indication information includes at least one of the following:
a bearer type, where the bearer type includes at least one of split bearer, master cell group MCG bearer, and secondary cell group SCG bearer; and
a mapping relationship between QoS flows and DRBs.

Optionally, the target DRB is an SN-terminated DRB.

It should be noted that the SN 600 in this embodiment of this disclosure may be the SN in any implementation of the method embodiments. Any implementation of the SN in the method embodiments can be implemented by the SN in this embodiment of this disclosure, with the same beneficial effect achieved. To avoid repetition, details are not described herein again.

FIG. 9 is a structural diagram of a network master node MN according to an embodiment of this disclosure. As shown in FIG. 9, the MN 900 includes a processor 901, a transceiver 902, a memory 903, and a bus interface.

The transceiver 902 is configured to:
transmit offloading request information to a network secondary node SN, where
the offloading request information includes information about a target QoS flow and resource indication information, and the resource indication information is used to indicate that the SN transmits the target QoS flow by using a target data radio bearer DRB.

Optionally, the target DRB is an existing DRB; or
the target DRB is a DRB established by the SN according to the resource indication information.

Optionally, the transceiver 902 is further configured to:
receive resource information transmitted by the SN; and
transmit feedback information to the SN; where
the resource information is resource information available to the SN for establishing the target DRB, and the feedback information is used to indicate whether the resource information is usable by the SN to establish the target DRB.

Optionally, the target QoS flow includes at least one of the following:
at least one QoS flow on one DRB; and
at least two QoS flows on at least two DRBs.

Optionally, the resource indication information includes at least one of the following:
a usable resource set; and
an unusable resource set.

Optionally, the resource indication information includes at least one of the following:
a bearer type, where the bearer type includes at least one of split bearer, master cell group MCG bearer, and secondary cell group SCG bearer; and
a mapping relationship between QoS flows and DRBs.

Optionally, the target DRB is an SN-terminated DRB.

In FIG. 9, a bus architecture may include any quantity of interconnected buses and bridges, and specifically connect together various circuits of one or more processors represented by the processor 901 and a memory represented by the memory 903. The bus architecture may further interconnect various other circuits such as a peripheral device, a voltage regulator, and a power management circuit. These are all common sense in the art, and therefore are not further described in this specification. The bus interface provides interfaces. The transceiver 902 may be a plurality of components, including a transmitter and a receiver, and provides units for communicating with a variety of other apparatuses on a transmission medium. For different user equipment, the user interface 904 may also be an interface capable of externally or internally connecting a required device, and the connected device includes but is not limited to a keypad, a display, a speaker, a microphone, a joystick, and the like.

The processor 901 is responsible for management of the bus architecture and general processing, and the memory 903 may store data for use by the processor 901 when the processor 901 performs an operation.

It should be noted that the MN 900 in this embodiment may be the MN in any implementation of the method embodiments. Any implementation of the MN in the method embodiments of this disclosure can be implemented by the MN in this embodiment, with the same beneficial effect achieved. Details are not described herein again.

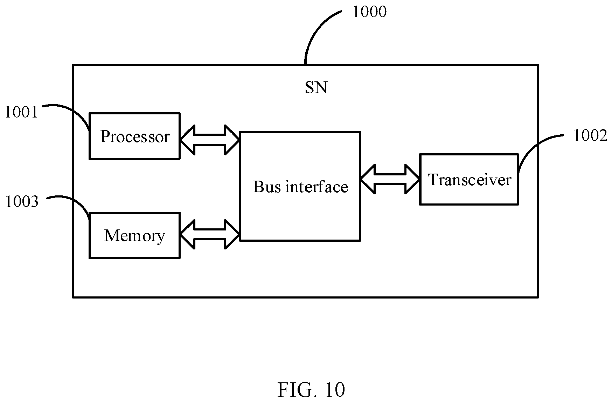

FIG. 10 is a structural diagram of a network secondary node SN according to an embodiment of this disclosure. As shown in FIG. 10, the SN 1000 includes a processor 1001, a transceiver 1002, a memory 1003, and a bus interface.

The transceiver 1002 is configured to:
receive offloading request information transmitted by a network master node MN, where the offloading request information includes information about a target QoS flow and resource indication information; and
transmit, according to the resource indication information, the target QoS flow by using a target data radio bearer DRB; or, in a case that the target QoS flow is unable to be transmitted according to the resource indication information, transmit resource information to the MN, where the resource information is resource information available to the SN for establishing the target DRB.

Optionally, the target QoS flow includes at least one of the following:
at least one QoS flow on one DRB; and
at least two QoS flows on at least two DRBs.

Optionally, the resource indication information includes at least one of the following:
a usable resource set; and
an unusable resource set.

Optionally, the target DRB is an existing DRB; or
the target DRB is a DRB established by the SN according to the resource indication information.

Optionally, if the SN transmits the resource information to the MN, the transceiver 1002 is further configured to:
receive feedback information transmitted by the MN, where the feedback information is used to indicate whether the resource information is usable by the SN to establish the target DRB.

Optionally, the resource indication information includes at least one of the following:
a bearer type, where the bearer type includes at least one of split bearer, master cell group MCG bearer, and secondary cell group SCG bearer; and
a mapping relationship between QoS flows and DRBs.

Optionally, the target DRB is an SN-terminated DRB.

In FIG. 10, a bus architecture may include any quantity of interconnected buses and bridges, and specifically connect together various circuits of one or more processors represented by the processor 1001 and a memory represented by the memory 1003. The bus architecture may further interconnect various other circuits such as a peripheral device, a voltage regulator, and a power management circuit. These are all common sense in the art, and therefore are not further described in this specification. The bus interface provides interfaces. The transceiver 1002 may be a plurality of components, including a transmitter and a receiver, and provides units for communicating with a variety of other apparatuses on a transmission medium. For different user equipment, the user interface 1004 may also be an interface capable of externally or internally connecting a required device, and the connected device includes but is not limited to a keypad, a display, a speaker, a microphone, a joystick, and the like.

The processor 1001 is responsible for management of the bus architecture and general processing, and the memory 1003 may store data for use by the processor 1001 when the processor 1001 performs an operation.

It should be noted that the SN 1000 in this embodiment may be the SN in any implementation of the method embodiments of this disclosure. Any implementation of the SN in the method embodiments of this disclosure can be implemented by the SN in this embodiment, with the same beneficial effect achieved. Details are not described herein again.

An embodiment of this disclosure further provides a computer-readable storage medium, where the computer-readable storage medium stores a computer program. When the computer program is executed by a processor, the processes of the foregoing transmission method with data offloading embodiment corresponding to the MN or the SN are implemented, with the same technical effect achieved. To avoid repetition, details are not described herein again. For example, the computer-readable storage medium is a read-only memory (Read-Only Memory, ROM), a random access memory (Random Access Memory, RAM), a magnetic disk, or an optical disc.

It should be noted that the terms "comprise", "include", or any of their variants in this specification are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element.

According to the description of the foregoing implementations, persons skilled in the art can clearly understand that the method in the foregoing embodiments may be implemented by software on a necessary universal hardware platform or by hardware only. In most cases, the former is a more preferred implementation. Based on such an understanding, the technical solutions of this disclosure essentially or a part thereof that contributes to related technologies may be embodied in a form of a software product. The computer software product is stored in a storage medium (for example, a ROM/RAM, a magnetic disk, or an optical disc), and includes several instructions for instructing user equipment (which may be a mobile phone, a computer, a server, an air conditioner, a network device, or the like) to perform the methods described in the embodiments of this disclosure.

The foregoing descriptions are only specific implementations of this disclosure, but are not intended to limit the protection scope of this disclosure. Any variation or replacement readily figured out by persons skilled in the art within the technical scope disclosed in this disclosure shall fall within the protection scope of this disclosure. Therefore, the protection scope of this disclosure shall be subject to the protection scope of the claims.

## Claims

1. A transmission method with data offloading, applied to a network master node MN, wherein the method comprises:
transmitting offloading request information to a network secondary node SN, wherein
the offloading request information comprises information about a target QoS flow and resource indication information, and the resource indication information is used to indicate that the SN transmits the target QoS flow by using a target data radio bearer DRB.

2. The method according to claim 1, wherein the target DRB is an existing DRB; or
the target DRB is a DRB established by the SN according to the resource indication information.

3. The method according to claim 1, further comprising:
receiving resource information transmitted by the SN; and
transmitting feedback information to the SN; wherein
the resource information is resource information available to the SN for establishing the target DRB, and the feedback information is used to indicate whether the resource information is usable by the SN to establish the target DRB.

4. The method according to claim 1, wherein the resource indication information comprises at least one of the following:
a bearer type, wherein the bearer type comprises at least one of split bearer, master cell group MCG bearer, and secondary cell group SCG bearer; and
a mapping relationship between QoS flows and DRBs.

5. The method according to claim 1, wherein the target DRB is an SN-terminated DRB.

6. A transmission method with data offloading, applied to a network secondary node SN, wherein the method comprises:
receiving offloading request information transmitted by a network master node MN, wherein the offloading request information comprises information about a target QoS flow and resource indication information; and
transmitting, according to the resource indication information, the target QoS flow by using a target data radio bearer DRB; or, in a case that the target QoS flow is unable to be transmitted according to the resource indication information, transmitting resource information to the MN, wherein the resource information is resource information available to the SN for establishing the target DRB.

7. The method according to claim 6, wherein the target DRB is an existing DRB; or
the target DRB is a DRB established by the SN according to the resource indication information.

8. The method according to claim 6, wherein if the SN transmits the resource information to the MN, the method further comprises:
receiving feedback information transmitted by the MN, wherein the feedback information is used to indicate whether the resource information is usable by the SN to establish the target DRB.

9. The method according to claim 6, wherein the resource indication information comprises at least one of the following:
a bearer type, wherein the bearer type comprises at least one of split bearer, master cell group MCG bearer, and secondary cell group SCG bearer; and
a mapping relationship between QoS flows and DRBs.

10. The method according to claim 6, wherein the target DRB is an SN-terminated DRB.

11. A network master node MN, comprising:
a first transmitting module, configured to transmit offloading request information to a network secondary node SN, wherein
the offloading request information comprises information about a target QoS flow and resource indication information, and the resource indication information is used to indicate that the SN transmits the target QoS flow by using a target data radio bearer DRB.

12. The MN according to claim 11, further comprising:
a receiving module, configured to receive resource information transmitted by the SN; and
a second transmitting module, configured to transmit feedback information to the SN; wherein
the resource information is resource information available to the SN for establishing the target DRB, and the feedback information is used to indicate whether the resource information is usable by the SN to establish the target DRB.

13. A network secondary node SN, comprising:
a first receiving module, configured to receive offloading request information transmitted by a network master node MN, wherein the offloading request information comprises information about a target QoS flow and resource indication information; and
a transmission module, configured to: transmit, according to the resource indication information, the target QoS flow by using a target data radio bearer DRB; or, in a case that the target QoS flow is unable to be transmitted according to the resource indication information, transmit resource information to the MN, wherein the resource information is resource information available to the SN for establishing the target DRB.

14. The SN according to claim 13, wherein if the SN transmits the resource information to the MN, the SN further comprises:
a second receiving module, configured to receive feedback information transmitted by the MN, wherein the feedback information is used to indicate whether the resource information is usable by the SN to establish the target DRB.

15. A network master node MN, comprising a processor, a memory, and a computer program stored in the memory and capable of running on the processor, wherein when the computer program is executed by the processor, the steps of the transmission method with data offloading according to any one of claims 1 to 5 are implemented.

16. A network secondary node SN, comprising a processor, a memory, and a computer program stored in the memory and capable of running on the processor, wherein when the computer program is executed by the processor, the steps of the transmission method with data offloading according to any one of claims 6 to 10 are implemented.

17. A computer-readable storage medium, wherein the computer-readable storage medium stores a computer program, and when the computer program is executed by a processor, the steps of the transmission method with data offloading according to any one of claims 1 to 5 are implemented; or when the computer program is executed by a processor, the steps of the transmission method with data offloading according to any one of claims 6 to 10 are implemented.
